(19) Europäisches Patentamt

European Patent Office

Office européen des brevets

(11) Veröffentlichungsnummer: **0 275 994 B1**

(12) **EUROPÄISCHE PATENTSCHRIFT**

(45) Veröffentlichungstag der Patentschrift: **07.04.93**

(51) Int. Cl.⁵: **G02B 6/44**

(21) Anmeldenummer: **88100791.8**

(22) Anmeldetag: **20.01.88**

(54) Verfahren und Vorrichtung zur Herstellung von definierten Lichtwellenleiterlängen in Lichtleitadern.

(30) Priorität: **23.01.87 DE 3701990**

(43) Veröffentlichungstag der Anmeldung:
**27.07.88 Patentblatt 88/30**

(45) Bekanntmachung des Hinweises auf die
Patenterteilung:
**07.04.93 Patentblatt 93/14**

(84) Benannte Vertragsstaaten:
**AT BE CH DE FR GB IT LI NL SE**

(56) Entgegenhaltungen:
**EP-A- 0 193 940**
**DE-A- 3 425 649**

(73) Patentinhaber: **SIEMENS AKTIENGESELL-
SCHAFT**
**Wittelsbacherplatz 2**
**W-8000 München 2(DE)**

(72) Erfinder: **Oestreich, Ulrich, Dipl.-Ing.**
**Karl-Witthalm-Strasse 15**
**W-8000 München 71(DE)**
Erfinder: **Schöber, Gernot, Dipl.-Ing.**
**Waterloostrasse 63**
**W-8000 München 71(DE)**
Erfinder: **Sutor, Norbert, Dipl.-Ing.**
**Bahnhofstrasse 21**
**W-8024 Deisenhofen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Ein Verfahren dieser Art ist aus der Patentanmeldung EP-A2 0 193 940 bekannt, wobei durch ausreichende Kopplung des Lichtwellenleiters an der Hülle eine gewisse Lichtwellenleiterlänge eingestellt wird. Die Kopplung zwischen Lichtwellenleiter und Hülle wird dabei durchweg durch das Umschlingen eines großen, mitlaufenden Radius von über 180°, möglichst 360°, erreicht. Der Lichtwellenleiter wird dann von den Einflüssen der Zulaufseite abgekoppelt, seine Länge wird durch Umlauf um Rad oder Auflauf auf Teller bestimmt. Hat an dieser Stelle die Hülle eine gegenüber einer genormten Umgebungstemperatur abweichende Temperatur, wird durch den anschließenden Temperaturausgleich eine Längenänderung der Hülle und dadurch eine bestimmte Überlänge (oder Unterlänge bei Unterkühlung) der Hülle erzielt. Die negative Abweichung des Lichtwellenleiters von der Hüllenlänge auf dem großen Radius wird dabei entweder vernachlässigt oder als Nebeneffekt betrachtet.

Das eingangs geschilderte Verfahren leidet allerdings unter einer Reihe von nachteiligen Nebeneinflüssen, die das Ergebnis erheblich beeinflussen können. So kann zum Beispiel der Faserbremszug, der den Lichtwellenleiter bis zum Aufwickelteller straff halten soll, durch unvermeidbare vorgeschaltete Umlenkungen heruntergesetzt und gegebenenfalls sogar unwirksam gemacht werden. Es bestimmen dann diese Umlenkungen die Abkopplung vom Faserbremszug und damit die endgültige Lichtwellenleiterlänge durch die dort wirksame Temperatur. Desweiteren variiert die negative Längenabweichung des Lichtwellenleiters, wenn die längenbestimmende Größe der variable Auflagendurchmesser auf dem Teller ist. Außerdem wird durch das angewandte Spritzverfahren zur Herstellung der losen Hülle eine Hüllenabzugskraft benötigt, die bis zum Abzug erhalten bleibt und die Hülle elastisch-plastisch dehnt. Die Kraft verschwindet hinter dem Abzug, die Hülle verkürzt sich anschließend. Damit können Überlängen entstehen, die nicht nur von genannten Temperaturunterschieden, sondern auch von der Abzugsgeschwindigkeit und der Extrusionstemperatur abhängen. Weiterhin besitzt die am Extruder mittels eines speziellen Verfahrens eingebrachte Füllmasse eine stark temperaturabhängige Minimalscherspannung, deren Überschreiten ein Gleiten des Lichtwellenleiters in der Masse überhaupt erst möglich macht. Diese Scherspannung muß von der Lichtwellenleiterbremskraft in jedem Falle überschritten werden. Ist der längenbestimmende Radius (z.B. Teller) selbst bei getrecktem Lichtwellenleiter zu weit vom Extruder entfernt, reicht die Bremskraft unter Umständen zum Straffziehen des Lichtwellenleiters bis auf das längenbestimmende Element nicht mehr aus. Dieser Umstand ist kaum vollständig kontrollierbar.

Es ist zweckmäßig, daß die Längenbestimmung zwar bei einer passenden Gleichgewichtstemperatur, aber so nahe wie möglich am Extruder vorzunehmen. Desweiteren soll die Längenbestimmung nicht auf einem Teller mit variablem Auflagedurchmesser erfolgen. Umlenkungen, wo sie auftreten, müssen entweder zu einem sicheren Ankoppeln des Lichtwellenleiters an die Lichtleitader führen, oder unterbleiben. Umlenkungen mit unklarer Haftwirkung sind zumindest vor dem Ort der Lichtwellenleiter-Längendefinition zu vermeiden. Auch sind nennenswerte Temperaturvariationen zumindest im Bereich des längenbestimmenden Elementes zu vermeiden. Und schließlich muß die unvermeidbare elastisch-plastische Hüllenverkürzung des Lichtwellenleiters kompensiert oder überkompensiert werden, so daß für jede Geschwindigkeit und jede Lichtwellenleiterabmessung im Prinzip jede gewünschte Über- oder Unterlänge des Lichtwellenleiters in der Lichtleitaderhülle einstellbar wird. Diese Kompensation sollte einstellbar und (nach Erfahrung) der Geschwindigkeit anpaßbar sein.

Der Erfindung liegt die Aufgabe zugrunde, unter Vermeidung der vorstehend erwähnten Nachteile eine Lichtleitaderlinie derart zu modifizieren, daß die Lichtwellenleiter unabhängig von der Extrusionsgeschwindigkeit und/oder des Lichtleitadertypes eine gegenüber der Hülle möglichst exakte Längenzuordnung aufweisen.

Diese Aufgabe wird erfindungsgemäß gelöst durch ein Verfahren zur Einstellung einer vorgegebenen Längenzuordnung zwischen einer Hülle, einer Lichtleitader und mindestens einem darin lose untergebrachten Lichtwellenleiter, wobei die Hülle mittels eines Extruders mit einstellbarer Abzugsgeschwindigkeit lose um den Lichtwellenleiter extrudiert wird, wobei die Lichtleitader um mindestens eine dem Extruder folgende Umlenkrolle derart geführt wird, daß der Lichtwellenleiter an der Innenwandung der Hülle definiert einseitig angelegt wird, wobei zur Einstellung der vorgegebenen Längenzuordnung zwischen der Hülle und dem Lichtwellenleiter der Durchmesser der Umlenkrolle, auf der die Lichtleitader aufliegt, variiert wird und wobei durch anschließende Abkühlung der Hülle diese definiert geschrumpft wird.

Eine derartige in ihrem Durchmesser verstellbare oder austauschbare Umlenkrolle bietet die Möglichkeit, jede gewünschte Längenzuordnung des Lichtwellenleiters gegenüber der Lichtleitaderhülle z.B. unter Berücksichtigung der Extrusionsgeschwindigkeit und/oder des Lichtleitaderdurchmessers zu erreichen. Dadurch, daß lediglich der Durchmesser der Umlenkrolle variiert werden muß, ist mit geringem Aufwand relativ schnell und zuverlässig die gewünschte Anpassung jederzeit zu erreichen, ohne daß große Umrüstvorgänge erforderlich werden. Dabei kann sogar so vorgegangen werden, daß die Durchmesseränderung stetig erfolgt, sofern sich entsprechende Parameter stetig ändern sollten. In den meisten Fällen wird es aber ausreichend sein, für z.B. einen bestimmten Durchmesser der Hülle und für eine bestimmte Abzugsgeschwindigkeit einen dazu passenden Durchmesser der Umlenkrolle auszuwählen und diesen fest einzustellen.

Gemäß einer besonders vorteilhaften Ausführungsform der Erfindung ist vorgesehen, den Durchmesser der Umlenkrolle in Abhängigkeit von der Abzugsgeschwindigkeit zu variieren. Die Abzugsgeschwindigkeit ist diejenige Größe, die in besonders starkem Maße die Längenzuordnung beeinflußt. Im einzelnen wird dabei vorteilhaft so vorgegangen, daß bei einer Erhöhung der Abzugsgeschwindigkeit v der Durchmesser der Umlenkrolle verkleinert wird.

Mit der Vergrößerung von v ist eine Reduktion der Kühlzeit t verbunden $t = \frac{1}{v}$ (1 = Kühllänge vor den ersten Speicher). Die Temperaturdifferenz zwischen Temperatur-Ist- und -Sollwert beträgt

$$\Delta \vartheta = \Delta \vartheta \cdot e^{-\frac{t}{T}},$$

wobei T = Zeitkonstante des Kühlvorganges.

Die Kühlzeit t soll mindestens 5 T betragen.

Wenn

$$5T = \frac{L}{v_{max}}$$

(wobei $v_{max}$ der zulässige Höchstwert von v ist) angesetzt wird, ist

$$\Delta \vartheta = \Delta \vartheta \cdot e^{-\frac{5 \cdot v_{max}}{v}}.$$

Für $v > v_{max}$ ist die zu kompensierende Temperaturdifferenz, die zu einer Hüllen-Längendifferenz

$$\frac{\Delta l_1}{l_1} = \Delta \vartheta \cdot \alpha$$

führt ($\alpha$ = wirksamer Ausdehnungskoeffizient). Andererseits ist der Faserlängenverlust

$$-\frac{\Delta L_2}{L_2} = \frac{d}{D},$$

wenn d der freie Ader-Innen-Durchmesser und D der effektive Umlenkrad-Durchmesser D ist. Somit wird

$$\Delta \vartheta \cdot \alpha = -\frac{d \cdot \Delta D}{D^2} \quad \text{also} \quad -\Delta D = \frac{\Delta \vartheta \cdot \alpha}{d} \cdot D^2.$$

Gemäß einer anderen vorteilhaften Weiterbildung der Erfindung ist vorgesehen, den Durchmesser D der Umlenkrolle in Abhängigkeit vom Durchmesser d der Lichtleitader zu variieren. Dabei ist zweckmäßig mit zunehmendem inneren Ader-Durchmesser der Durchmesser D der Umlenkrolle vergrößert. Als Gesetzmäßigkeit für die Vergrößerung des Durchmessers der Lichtleitader d in Bezug auf den Durchmesser D der Umlenkrolle kann folgende Gesetzmäßigkeit angegeben werden:

3

Wie oben gilt auch hier: $\epsilon - = -\frac{\Delta l}{l} = \frac{d}{D} =$ Konst

$(-\frac{\partial \epsilon}{\partial d} = \frac{1}{D} , -\partial \epsilon = \frac{1}{D} . \partial d$

$$- \frac{\partial \epsilon}{\epsilon} = \frac{D}{d.D} . \partial d = \frac{\partial d}{d} )$$

$$d = \epsilon - \text{Konst} . D , \quad D = \frac{d}{\epsilon - \text{Konst}} .$$

Es ist zweckmäßig, die Umlenkrolle auf einer konstanten, vorzugsweise erhöhten Temperatur zu halten. Als erhöhte Temperaturwerte für die Umgebung der Umlenkrolle sind Werte zwischen 20° und 120°C zweckmäßig. Weiterhin ist es zweckmäßig, die Umlenkrolle soweit wie möglich in der Nähe des Extruders anzuordnen, wenn die angestrebte stabilisierbare Temperatur hoch genug ist.

Weiterhin kann es zweckmäßig sein, die Umlenkrolle mit einem definierten Moment (Drehmoment geregelter Antrieb) anzutreiben, weil sich dadurch die Lichtwellenleiteraderhülle bereits lange vor dem Passieren des Abzugs weitgehend entspannen kann. Dadurch wird eine Messung der Längenzuordnung des Lichtwellenleiters zur Hülle hinter dem Abzug weniger verfälscht. Eine präzise Geschwindigkeitsmessung dort, z.B. an den Umlenkrollen vor und nach dem endgültigen Temperatursprung gibt dann in einfacher Weise relativ genaue Auskunft darüber, ob die gewünschte Lichtwellenleiterlänge tatsächlich eingestellt worden ist. Es ist zweckmäßig, die Länge der Aderhülle und nach der endgültigen Schrumpfung im entlasteten Zustand unter Einbezug des Längenverlustes auf der Umlenkrolle zu messen.

Die Erfindung betrifft weiterhin eine Vorrichtung zur Durchführung des Verfahrens unter Verwendung eines Extruders zum Extrudieren einer mindestens einen Lichtwellenleiter lose umgebenden Hülle, einer Kühleinrichtung zum Schrumpfen der Hülle gegenüber dem Lichtwellenleiter sowie einer Vorrichtung zum Abziehen der Hülle der Lichtleitader mit einstellbarer Abzugsgeschwindigkeit, welche dadurch gekennzeichnet ist, daß nach dem Extruder eine in ihrem Durchmesser variierbare Umlenkrolle vorgesehen ist.

Weiterbildungen der Erfindung sind in den Unteransprüchen wiedergegeben.

Das erfindungsgemäße Verfahren und dessen Vorrichtung, sowie die Weiterbildungen werden nachfolgend anhand von Zeichnungen näher erläutert. Es zeigen:

Figur 1      eine von einer Lichtleitader umschlungene Umlenkrolle,
Figur 2      eine durchmesserverstellbare Umlenkrolle aus vieleckigen Polygonen,
Figur 3      eine durch Druckluft in ihrem Durchmesser verstellbare Umlenkrolle,
Figur 4      eine aus zwei konischen Hälften bestehende durchmesserverstellbare Umlenkrolle,
Figur 5      eine schematisch dargestellte Vorrichtung zur Durchführung des erfindungsgemäßen Verfahrens und
Figur 6      die Umlenkrolle nach Figur 5 in Draufsicht.

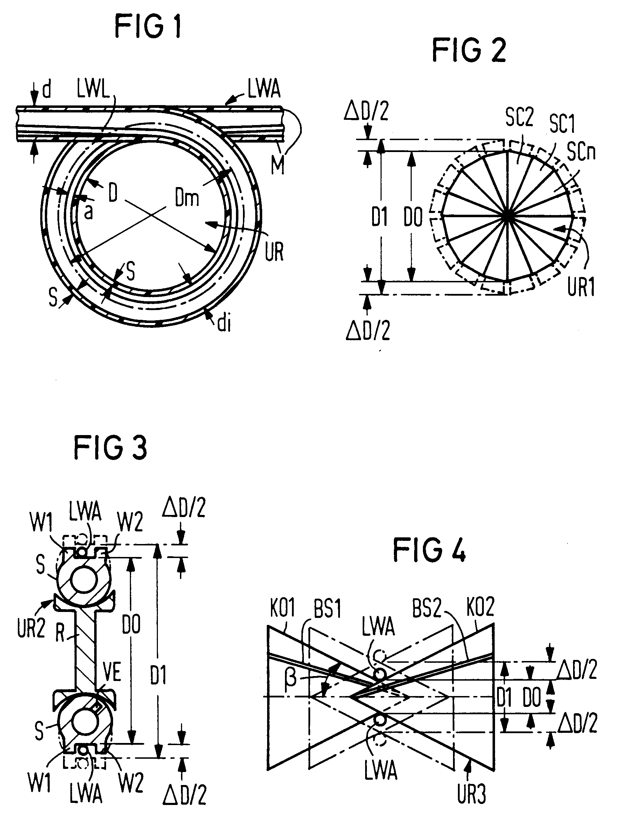

Anhand von Figur 1 soll der Einfluß des Umlenkrollendurchmessers D auf die Fehllänge $\epsilon$ des Lichtwellenleiters LWL in Abhängigkeit vom Durchmesser der Lichtleitader d näher erläutert werden. Wird eine Lichtleitader LWA, deren Innendurchmesser di größer ist als der Durchmesser des Lichtwellenleiters a (bzw. Lichtwellenleiterbündel-Ersatzdurchmesser a), um eine Umlenkrolle UR aufgewickelt, legt sich der Lichtwellenleiter LWL an die Innenwand der Hülle M, die der Rollenachse am nächsten ist. Für die nachstehende Berechnung der dabei auftretenden Fehllänge $\epsilon$ sind in Figur 1 noch die Wandstärke s der Hülle M, sowie der mittlere Lichtleitaderlaufdurchmesser Dm angegeben. Nach Figur 1 läßt sich die an der Umlenkrolle UR auftretende Fehllänge wie folgt berechnen:

$$\epsilon = \frac{Dm - (D+2s+a)}{Dm} = \frac{d-2s-a}{D+d};$$

mit der Umformung Dm = D + d. Dabei ist zu beachten, daß die Biegeverformung der Lichtleitaderhülle M<3 % sein muß, um plastische Verformungen auszuschließen, die das Ergebnis verfälschen könnten. Ebenso darf die Reibung zwischen der Außenoberfläche der Lichtleitaderhülle M und der Umlenkrolle UR nicht so groß sein, daß die Achslänge der Lichtleitaderhülle M durch sie beeinflußt wird.

Soll die Fehllänge $\epsilon$ bei bestimmten Betriebsverhältnissen unabhängig vom Durchmesser d der Lichtleitader LWA sein, erhält man durch Umformung den Durchmesser D der Umlenkrolle UR zu

$$D = \frac{d - 2s - a}{\varepsilon_-} - d$$

oder, da

stets $2s \approx 0,4\ d$ ist

$$D = \frac{0,6\ d - a}{\varepsilon_-} - d.$$

Setzt man $a \approx 0,1d$, wird weiter

$$D \approx \frac{0,5\ d}{\varepsilon_-} - d \quad \text{oder} \quad \varepsilon_- \approx \frac{0,5\ d}{D + d}.$$

Setzt man z.B. äußerstenfalls $\epsilon_- = 10^{-2}$, wird für die Lichtleitader LWA mit $d = 2$ mm der Durchmesser D der Umlenkrolle UR:

$$D \approx 10^2 \cdot 2 = 98 \approx 100\ \text{mm},$$

womit die Biegedehnung bei $\approx 2\ \%$ bleibt.

Ebenso wird für

$$d = 3\ \text{mm} : D \approx 150\ \text{mm usw.}$$

Nimmt man an, daß die elastische Kürzung hinter dem Abzug vernachlässigbar ist, wird die zur Kompensation der Unterlänge (Fehllänge $\epsilon_-$) nötige Überlänge $\epsilon_+$ durch die Übertemperatur der Hülle M an der längenbestimmenden Umlenkrolle UR erreicht: $\Delta\ \vartheta = \frac{\epsilon +}{\alpha}$ , wobei der Ausdehnungskoeffizient $\alpha$ als konstant anzusehen ist. Die resultierende Überlänge $\Delta\ \epsilon = \epsilon_+ - \epsilon_-$ wird im allgemeinen $\geq 0$ sein. Mit der obenstehend berechneten Fehllange $\epsilon_-$ erhält man letztlich die resultierende Überlänge

$$\Delta\ \varepsilon = \Delta\vartheta\cdot\alpha - \frac{0,5\ d}{D + d}$$

des Lichtwellenleiters LWL in der Lichtleitader LWA.

Im allgemeinen wird man mit $\frac{D}{d} \approx 100$ arbeiten, was zu $\epsilon \approx 0,5\ \%$ und $\Delta\ \vartheta \approx 60$ K führt, ein Wert, der noch mit Wasser zu erreichen ist (wegen des guten Wärmeübergangs sehr erwünscht).

Mit der systematisch an den Lichtleitaderdurchmesser d angepaßten Lichtwellenleiter-Unterlängeneinstellung und einer stabilisierten Temperatur von z.B. 60°-80°C im Umlenkrollenbereich wird es nun erstmals möglich, jede gewünschte Lichtwellenleiter-Über- oder Unterlänge $\Delta\ \epsilon$ sicher einzustellen. Existiert eine laufende Messung des Verhältnisses von Lichtwellenleiter- zur Hüllenlänge, wird es sinnvoll, das Verhältnis auf den Sollwert korrigieren zu können, also den Durchmesser D der Umlenkrolle UR oder die Temperatur-Differenz kontinuierlich verstellbar zu machen. Der Umschlingungswinkel bei der Umlenkrolle UR sollte ausreichend groß, vorzugsweise zwischen 270° und 360° gewählt werden.

In Figur 2 ist eine erste Ausführungsform einer durchmesserverstellbaren Umlenkrolle UR1 dargestellt. Ein vieleckiges Polygon mit seinem kleinsten Durchmesser D0 läßt sich kontinuierlich bis zu einem Durchmesser D1 verstellen, wie in der Zeichnung gestrichelt angedeutet ist. Der Durchmesser D der Umlenkrolle UR1 kann den Betriebsverhältnissen entsprechend um den Betrag $\Delta$ D stufenlos eingestellt werden. Dabei werden die einzelnen Sektoren SC1-SCn des Polygons nach außen verschoben, was überentsprechende, hier nicht dargestellte Führungselemente erfolgen kann, die an der Rollenachse gehalten sind.

Figur 3 zeigt im Querschnitt eine weitere Ausführungsform einer durchmesserverstellbaren Umlenkrolle UR2. Ein auf ein entsprechend geformtes Rad R (z.B. Felge) aufgesetzter ringförmiger Schlauch S kann durch Druckluft über ein Ventil VE in seinem Durchmesser vergrößert bzw. verkleinert werden. Der Durchmesser D0 der Umlenkrolle UR2 läßt sich somit kontinuierlich bis auf den Wert D1 verstellen (in Figur 3 gestrichelt angedeutet), sodaß sich eine Durchmesseränderung der Umlenkrolle UR2 um den Betrag $\Delta$ D erreichen läßt. Um die Lichtleitader LWA problemlos über die Umlenkrolle UR2 führen zu können, ist der Schlauch an seiner Außenseite mit zwei nasenförmigen ringförmig umlaufenden Wülsten W1,W2 versehen.

In Figur 4 ist eine besonders einfache Ausführungsform einer durchmesserverstellbaren Umlenkrolle UR3 dargestellt. Durch Verschiebung zweier ineinandergreifender Konen K01,K02 kann der an der Überschneidungsstelle auftretende Durchmesser D0 bis auf den Wert D1 stufenlos vergrößert werden, wie durch die gestrichelte Darstellung angedeutet ist. An der Überschneidungsstelle der beiden Konen K01,K02 kann somit der Durchmesser der Umlenkrolle UR3 um den Betrag $\Delta$ D variiert werden. Der Kegelwinkel $\beta$ der beiden Konen K01,K02 sollte größer als 45° d.h. Schnittwinkel $\geqq$ 90° sein, damit sich die Hülle M der Lichtleitader LWA nicht verklemmt. Diese Umlenkrolle UR3 wird leicht gelagert und vorzugsweise mit einem geeigneten Hilfsantrieb versehen. Die Konen K01 und K02 bestehen aus längs der Hüllenlinie laufenden kegelförmigen Blechsegmente, die jeweils ineinandergreifen. Zwei dieser Blechsegmente BS1 und BS2 sind in Figur 4 dargestellt. Auf diese Weise ist die Durchmesseränderung durch axiale Verschiebung der beiden Konen K01 und K02 in einfacher Weise möglich.

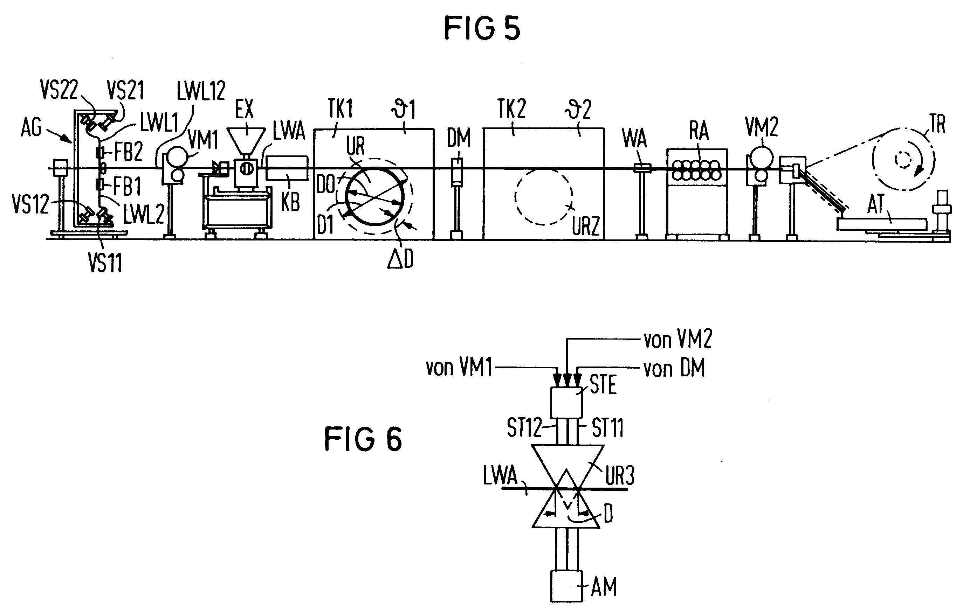

In der in Figur 5 dargestellten horizontalen Fertigungslinie ist ein Ablaufgestell AG vorgesehen, an dem Vorratsspulen VS11, VS12, VS21 und VS22 befestigt sind. Die ablaufenden Lichtwellenleiter LWL1, LWL2 werden über eine Faserbremse FB1 bzw. FB2 und über entsprechende Rollen in bekannter Weise zu einem Bündel zusammengefaßt, das mit LWL12 bezeichnet ist. Anstelle eines derartigen Bündels von Lichtwellenleitern kann aber auch ein einzelner Lichtwellenleiter in der nachfolgend noch beschriebenen Weise weiterbehandelt werden. Die Fasern können über einen Rohrspeicher partiell miteinander SZ-verseilt sein.

Das Lichtwellenleiterbündel LWL12 gelangt (gegebenenfalls nach Zuführung einer Füllmasse) zu einem Extruder EX, durch den die Hülle M in Form eines Kunststoffmaterials auf das einlaufende Lichtwellenleiterbündel LWL12 aufgebracht wird. Nach ausreichender Vorkühlung, z.B. durch ein geradlinig durchlaufendes Kühlbecken KB, läuft die mit einer Hülle M versehene Lichtleitader LWA in eine erste temperierte Kammer TK1 ein, die auf einer bestimmten Temperatur $\vartheta 1$ gehalten wird. In dieser temperierten Kammer TK1 befindet sich mindestens eine durchmesserverstellbare Umlenkrolle UR. Diese Umlenkrolle UR wird dabei von der Lichtleitader LWA umschlungen und mit einem definierten Moment durch einen Antriebsmotor AM (vgl. Figur 6) angetrieben, und zwar so, daß die Reibungsmomente gerade kompensiert werden. Die Geschwindigkeitsmessung erfolgt in den Umlenkrädern der ersten Kammer TK1 und der zweiten Kammer TK2. Bei Variation des Durchmessers in der ersten Kammer TK1 wird die Geschwindigkeit in der zweiten Kammer TK2 bestimmt.

In Abhängigkeit vom Außendurchmesser d der Lichtleitader LWA und/oder von der Abzugsgeschwindigkeit kann der Durchmesser D der Umlenkrolle UR zwischen den Werten D0 und D1 kontinuierlich variiert werden (in Figur 5 gestrichelt angedeutet). Der sich dabei ergebende Durchmesservariationsbereich $\Delta$ D umfaßt dabei alle gängigen Betriebsverhältnisse, so daß im Prinzip jede erforderliche Über- oder Unterlänge der Lichtwellenleiter LWL12 an der Lichtwellenleiterhülle M einstellbar ist. Wird beispielsweise mit erhöhter Abzugsgeschwindigkeit gearbeitet, so wird der Durchmesser D der Umlenkrolle UR verkleinert, um die gewünschte Längenzuordnung von Lichtwellenleiter LWL12 zur Hülle M beizubehalten.

Es ist aber auch möglich, die Lichtleitader LWA in der temperierten Kammer TK1 über mehr als eine durchmesserverstellbare Umlenkrolle UR3 zu führen. Dabei soll die Lichtleitader LWA derart geführt werden, daß sich ein Umschlingwinkel von mehr als 180° ergibt. Bei Verwendung von zwei Umlenkrollen UR können dieselben z.B. in Form einer Acht von der Lichtleitader LWA umschlungen werden. Am Ausgang der temperierten Kammer TK1 ist eine Dickenmeßeinrichtung DM vorgesehen, bevor die Lichtleitader LWA in eine zweite temperierte Kammer TK2 (Temperatur $\vartheta_2$) einläuft. Im vorliegenden Beispiel ist angenommen, daß die zweite temperierte Kammer TK2 von der Lichtleitader LWA gradlinig durchlaufen wird. Es ist aber auch möglich, in der zweiten Kammer TK2 ein oder mehrere Umlenkrollen einzusetzen, die zweckmäßig ohne Durchmesservariation arbeiten (gestrichelt angedeutet eine Umlenkrolle URZ). Diese Umlenkrolle(n) können auch zur exakten Geschwindigkeitsmessung herangezogen werden. Für den Fall, daß eine Flüssigkeitskühlung (z.B. durch Wasser) im Bereich der temperierten Kammer TK1 oder TK2 vorgesehen ist, sind an deren Ausgang entsprechende Absaugvorrichtungen vorzusehen. Im vorliegenden Ausführungsbeispiel ist eine derartige Anordnung am Ausgang der temperierten Kammer TK2 angebracht und mit WA bezeichnet. Die abgekühlte Lichtleitader LWA gelangt zu einem Raupenabzug RA und über eine Geschwindigkeitsmesseinrichtung VM2 zu einem geradlinig durchlaufenden Tellerwickler AT. Anstelle des Tellerwicklers AT kann die abgekühlte Lichtleitader LWA auch auf eine Kabeltrommel TR aufgewickelt werden (in Figur 5 gestrichelt dargestellt).

EP 0 275 994 B1

Bei der Umlenkrolle UR3 nach Figur 6 ist eine Steuereinrichtung STE vorgesehen, welche z.B. über Schubstangen ST11, ST12 die Umlenkrolle UR3 in ihrem Durchmesser D entsprechend einstellt. Zur Bestimmung der notwendigen Stellgröße, werden die erforderlichen Meßdaten der Steuerschaltung STE zugeführt, und zwar, die Geschwindigkeit des Lichtwellenleiterbündels LWL12 (von der Geschwindigkeitsmesseinrichtung VM1) oder den Umlenkrädern selbst, die Geschwindigkeit der Lichtleitader LWA (von der Geschwindigkeitsmesseinrichtung VM2) und der Durchmesserwert d der Lichtleitader LWA (von der Meßeinrichtung DM). Die Auswertung und Verknüpfung dieser Daten erfolgt zweckmäßig mittels eines in der Steuereinrichtung STE vorgesehenen Mikroprozessors.

Durch die laufende Messung der Lichtwellenleiterlänge (Geschwindigkeitsmeßeinrichtung VM1) und der Lichtleitaderlänge (Geschwindigkeitsmeßeinrichtung VM2) kann die momentan auftretende Fehllänge $\Delta\epsilon$ der Lichtwellenleiter LWL12 während des Betriebes gemessen werden. Bei Abweichungen vom Sollwert kann die Fehllänge $\Delta\epsilon$ durch Verstellen des Durchmessers D der Umlenkrolle UR auf den gewünschten Wert korrigiert werden.

Zu Kühlzwecken können die Kammern TK1 und TK2 möglichst hoch mit einer kühlenden Flüssigkeit (vorteilhaft Wasser) gefüllt werden, die entsprechend temperaturgeregelt wird. Vorteilhaft erweist sich eine Temperatur $\vartheta 1$ von 60° bis 80° C für die temperierte Kammer TK1. Für die Temperaturdifferenz $\Delta\vartheta(\vartheta_1 - \vartheta_2)$ zwischen den beiden Kammern TK1 und TK2 soll ein Wert von ca. 60° C angestrebt werden. Dieser Wert kann durch Wasserkühlung noch ohne Schwierigkeiten erreicht werden.

Das erfindungsgemäße Verfahren bietet also die Möglichkeit, eine vorgegebene Längenzuordnung des Lichtwellenleiters LWL12 zur Lichtleitader LWA durch kontinuierliches Verstellen des Umlenkrollendurchmessers D exakt einzustellen und beizubehalten.

**Patentansprüche**

1. Verfahren zur Einstellung einer vorgegebenen Längenzuordnung zwischen einer Hülle (M) einer Lichtleitader (LWA) und mindestens einem in der Hülle lose untergebrachten Lichtwellenleiter (LWL),
   wobei die Hülle (M) mittels eines Extruders (EX) mit einstellbarer Abzugsgeschwindigkeit lose um den Lichtwellenleiter (LWL) extrudiert wird,
   wobei die Lichtleitader (LWA) um mindestens eine dem Extruder (EX) folgende Umlenkrolle (UR) derart geführt wird, daß der Lichtwellenleiter (LWL) an der Innenwandung der Hülle (M) definiert einseitig angelegt wird,
   wobei zur Einstellung der vorgegebenen Längenzuordnung zwischen der Hülle (M) und dem Lichtwellenleiter (LWL) der Durchmesser (D) der Umlenkrolle (UR), auf der die Lichtleitader (LWA) aufliegt, variiert wird
   und wobei durch anschließende Abkühlung der Hülle (M) diese definiert geschrumpft wird.

2. Verfahren nach Anspruch 1,
   **dadurch gekennzeichnet,**
   daß bei Verwendung mehrerer Umlenkrollen (VR) zumindest der Durchmesser (D) der in Durchlaufrichtung gesehen ersten Umlenkrolle (VR) variiert wird.

3. Verfahren nach einem der vorhergehenden Ansprüche,
   **dadurch gekennzeichnet,**
   daß der Durchmesser (D) der Umlenkrolle (UR) in Abhängigkeit von der Abzugsgeschwindigkeit variiert wird.

4. Verfahren nach Anspruch 3,
   **dadurch gekennzeichnet,**
   daß bei Erhöhung der Abzugsgeschwindigkeit der Durchmesser (D) der Umlenkrolle (UR) verkleinert wird.

5. Verfahren nach einem der vorhergehenden Ansprüche,
   **dadurch gekennzeichnet,**
   daß der Durchmesser (D) der Umlenkrolle (UR) in Abhängigkeit vom Durchmesser (d) der Lichtleitader (LWA) variiert wird.

6. Verfahren nach Anspruch 5,
   **dadurch gekennzeichnet,**

7

EP 0 275 994 B1

daß mit zunehmendem Durchmesser der Lichtleitader (LWA) der Durchmesser (D) der Umlenkrolle (UR) vergrößert wird.

7. Verfahren nach einem der vorhergehenden Ansprüche,
**dadurch gekennzeichnet,**
daß die Lichtleitader (LWA) über mehr als eine in ihrem Durchmesser (D) verstellbare Umlenkrolle (UR) geführt wird.

8. Verfahren nach einem der vorhergehenden Ansprüche,
**dadurch gekennzeichnet,**
daß die Umlenkrolle (UR) mit einem Umschlingwinkel von mehr als 180° umschlungen wird.

9. Verfahren nach einem der vorhergehenden Ansprüche,
**dadurch gekennzeichnet,**
daß die Umlenkrolle (UR) derart mit einem definierten Moment angetrieben wird, daß sich eine Zugentlastung für die Lichtleitader (LWA) ergibt.

10. Verfahren nach einem der vorhergehenden Ansprüche,
**dadurch gekennzeichnet,**
daß zwischen Lichtwellenleiter (LWL) und Hülle (M) eine gelartige Masse eingebracht wird.

11. Verfahren nach einem der vorhergehenden Ansprüche
**dadurch gekennzeichnet,**
daß die Abkühlung der Lichtleitader (LWA) durch ein Wasserbad vorgenommen wird.

12. Verfahren nach einem der vorhergehenden Ansprüche
**dadurch gekennzeichnet,**
daß die Temperatur der Lichtleitader (LWA) im Bereich der Umlenkrolle (UR) konstant vorzugsweise auf erhöhter Temperatur (z.B. 20°C bis 120°C) gehalten wird.

13. Verfahren nach einem der vorhergehenden Ansprüche
**dadurch gekennzeichnet,**
daß die Umlenkrolle (UR) von der Lichtleitader (LWA) unmittelbar auf dem Extruder (EX) folgend durchlaufen wird.

14. Verfahren nach einem der vorhergehenden Ansprüche,
**dadurch gekennzeichnet,**
daß die Lichtleitader (LWA) vor der Umlenkrolle (UR) geradlinig durch ein gestrecktes Kühlbecken (KB) geführt wird.

15. Verfahren nach einem der vorhergehenden Ansprüche
**dadurch gekennzeichnet,**
daß als Umlenkrolle (UR) mit verstellbarem Durchmesser (D) zwei ineinandergreifende Konushälften (KH) gegeneinander verschoben werden.

16. Vorrichtung zur Durchführung des Verfahrens nach einem der vorhergehenden Ansprüche unter Verwendung eines Extruders (EX) zum Extrudieren einer mindestens einen Lichtwellenleiter (LWL) lose umgebenden Hülle (M), einer Kühleinrichtung zum Schrumpfen der Hülle (M) gegenüber dem Lichtwellenleiter (LWL) sowie einer Vorrichtung zum Abziehen der Hülle (M) der Lichtleitader (LWA) mit einstellbarer Abzugsgeschwindigkeit,
**dadurch gekennzeichnet,**
daß nach dem Extruder (EX) eine in ihrem Durchmesser (D) variierbare Umlenkrolle (UR) vorgesehen ist.

17. Vorrichtung nach Anspruch 16,
**dadurch gekennzeichnet,**
daß eine erste Meßeinrichtung (VM1) für die Bestimmung der Abzugsgeschwindigkeit der Lichtwellenleiter (LWL) und eine zweite Meßeinrichtung (VM2) für die Bestimmung der Geschwindigkeit der

8

Lichtleitader (LWA) vorgesehen sind und daß die durch diese Meßeinrichtungen gewonnene Meßgrößen als Stellgrößen für die Veränderung des Durchmessers (D) der Umlenkrolle (UR) dienen.

18. Verfahren nach Anspruch 17,
**dadurch gekennzeichnet,**
daß eine zweite Geschwindigkeits-Meßeinrichtung durch eine in ihrem Durchmesser nicht variierte Umlenkrolle (URZ) gebildet ist.

19. Vorrichtung nach einem der Ansprüche 16 bis 18,
**dadurch gekennzeichnet,**
daß eine Meßeinrichtung (DM) für die Bestimmung des Durchmessers (d) der Lichtleitader (LWA) vorgesehen ist und daß die auf diese Weise bestimmte Meßgröße als Steuergröße für die Veränderung des Durchmessers (D) der Umlenkrolle (UR) dient.

20. Vorrichtung nach einem der Ansprüche 16 bis 19,
**dadurch gekennzeichnet,**
daß mehr als eine in ihrem Durchmesser (D) verstellbare Umlenkrolle (UR) vorgesehen ist.

21. Vorrichtung nach einem der Ansprüche 16 bis 20,
**dadurch gekennzeichnet,**
daß der Umschlingungswinkel der Umlenkrolle (UR) mindestens 180°, vorzugsweise über 270° beträgt.

22. Vorrichtung nach einem der Ansprüche 16 bis 21,
**dadurch gekennzeichnet,**
daß die Umlenkrolle (UR) mit einer Antriebseinrichtung versehen ist.

23. Vorrichtung nach Anspruch 22,
**dadurch gekennzeichnet,**
daß die Antriebseinrichtung der Umlenkrolle (UR) drehmomentgesteuert ist.

24. Vorrichtung nach einem der Ansprüche 16 bis 23,
**dadurch gekennzeichnet,**
daß vor dem Extruder (EX) eine Fülleinrichtung für die Einbringung einer gelartigen Masse in das Innere der Lichtleitader (LWA) vorgesehen ist.

25. Vorrichtung nach einem der Ansprüche 16 bis 24,
**dadurch gekennzeichnet,**
daß zur Abkühlung der Lichtleitader (LWA) ein Kühlbecken (KB), vorzugsweise zwischen dem Extruder (EX) und der im Durchmesser variablen Umlenkrolle (UR) angeordnet, vorgesehen ist.

**Claims**

1. Method for setting a prescribed length allocation between a sheath (M) of an optical fibre core (LWA) and at least one optical fibre (LWL) loosely accommodated in the sheath, the sheath (M) being extruded loosely around the optical fibre (LWL) by means of an extruder (EX) having an adjustable withdrawal rate, the optical fibre core (LWA) being guided around at least one deflection roller (UR) following the extruder (EX) in such a way that the optical fibre (LWL) is seated in a defined one-sided fashion on the inside wall of the sheath (M), the diameter (D) of the deflection roller (UR) on which the optical fibre core (LWA) rests being varied in order to set the prescribed length allocation between the sheath (M) and the optical fibre (LWL), and the sheath (M) being shrunk in a defined fashion by subsequent cooling thereof.

2. Method according to Claim 1, characterised in that in the case of the use of a plurality of deflection rollers (UR) at least the diameter (D) of the first deflection roller (UR) seen in the direction of passage is varied.

EP 0 275 994 B1

3. Method according to one of the preceding claims, characterised in that the diameter (D) of the deflection roller (UR) is varied as a function of the withdrawal rate.

4. Method according to Claim 3, characterised in that in the case of increasing the withdrawal rate the diameter (D) of the deflection roller (UR) is reduced.

5. Method according to one of the preceding claims, characterised in that the diameter (D) of the deflection roller (UR) is varied as a function of the diameter (d) of the optical fibre core (LWA).

6. Method according to Claim 5, characterised in that with increasing diameter of the optical fibre core (LWA) the diameter (D) of the deflection roller (UR) is increased.

7. Method according to one of the preceding claims, characterised in that the optical fibre core (LWA) is guided over more than one deflection roller (UR) with an adjustable diameter (D).

8. Method according to one of the preceding claims, characterised in that the deflection roller (UR) is wrapped around with an angle of wrap of more than 180°.

9. Method according to one of the preceding claims, characterised in that the deflection roller (UR) is driven with a defined torque in such a way that a strain relief is produced for the optical fibre core (LWA).

10. Method according to one of the preceding claims, characterised in that a gel-like compound is introduced between the optical fibre (LWL) and sheath (M).

11. Method according to one of the preceding claims, characterised in that the cooling of the optical fibre core (LWA) is performed by a water bath.

12. Method according to one of the preceding claims, characterised in that the temperature of the optical fibre core (LWA) in the region of the deflection roller (UR) is kept constant, preferably at a raised temperature (for example 20°C to 120°C).

13. Method according to one of the preceding claims, characterised in that the deflection roller (UR) is passed through by the optical fibre core (LWA) directly following the extruder (EX).

14. Method according to one of the preceding claims, characterised in that the optical fibre core (LWA) is guided before the deflection roller (UR) in a straight line through an elongated cooling basin (KB).

15. Method according to one of the preceding claims, characterised in that two interlocking half cones (KH) are displaced relative to one another as the deflection roller (UR) having an adjustable diameter (D).

16. Device for carrying out the method according to one of the preceding claims with the use of an extruder (EX) for extruding a sheath (M) loosely surrounding at least one optical fibre (LWL), a cooling device for shrinking the sheath (M) relative to the optical fibre (LWL), and a device for withdrawing the sheath (M) of the optical fibre core (LWA) at an adjustable withdrawal rate, characterised in that a deflection roller (UR) with a variable diameter (D) is provided after the extruder (EX).

17. Device according to Claim 16, characterised in that a first measuring device (VM1) for determining the withdrawal rate of the optical fibre (LWL) and a second measuring device (VM2) for determining the speed of the optical fibre core (LWA) are provided, and in that the measured variables obtained by these measuring devices serve as manipulated variables for changing the diameter (D) of the deflection roller (UR).

18. Device according to Claim 17, characterised in that a second speed measuring device is formed by a deflection roller (URZ) whose diameter is not varied.

10

**19.** Device according to one of Claims 16 to 18, characterised in that a measuring device (DM) for determining the diameter (d) of the optical fibre core (LWA) is provided, and in that the measured variables determined in this way serve as controlled variables for changing the diameter (D) of the deflection roller (UR).

**20.** Device according to one of Claims 16 to 19, characterised in that more than one deflection roller (UR) with an adjustable diameter (D) is provided.

**21.** Device according to one of Claims 16 to 20, characterised in that the angle of wrap of the deflection roller (UR) is at least 180°, preferably more than 270°.

**22.** Device according to one of Claims 16 to 21, characterised in that the deflection roller (UR) is provided with a drive device.

**23.** Device according to Claim 22, characterised in that the drive device of the deflection roller (UR) is torque-controlled.

**24.** Device according to one of Claims 16 to 23, characterised in that there is provided before the extruder (EX) a filling device for introducing a gel-like compound into the interior of the optical fibre core (LWA).

**25.** Device according to one of Claims 16 to 24, characterised in that a cooling basin (KB) is provided for cooling the optical fibre core (LWA), preferably between the extruder (EX) and the deflection roller (UR) with a variable diameter.

**Revendications**

**1.** Procédé pour ajuster une coordination prédéterminée des longueurs entre une gaine (M) d'un conducteur formant guide de lumière (LWA) et d'au moins un guide d'ondes optiques (LWL) logé de façon lâche dans la gaine, et selon lequel
la gaine (M) est extrudée au moyen d'une extrudeuse (EX) à une vitesse de tirage réglable, d'une manière lâche autour du guide d'ondes optiques (LWL),
le conducteur formant guide de lumière (LWA) est guidé autour d'au moins un galet de renvoi (UR) qui est disposé en aval de l'extrudeuse (ER), de telle sorte que le guide d'ondes optiques (LWL) est appliqué unilatéralement et de façon définie contre la paroi intérieure de la gaine (M), alors que pour ajuster de la coordination prédéterminée des longueurs entre la gaine (M) et le guide d'ondes optiques (LWL), on modifie le diamètre (D) du galet de renvoi (UR), sur lequel s'applique le conducteur formant guide de lumière (LWA), et qu'on réalise une contraction définie de la gaine (M) par post-refroidissement de cette dernière.

**2.** Procédé suivant la revendication 1, caractérisé par le fait que dans le cas de l'utilisation de plusieurs galets de renvoi (VR), on modifie au moins le diamètre (D) du premier galet de renvoi (VR), qui est le premier lorsqu'on regarde dans la direction de déplacement.

**3.** Procédé suivant l'une des revendications précédentes, caractérisé par le fait qu'on modifie le diamètre (D) du galet de renvoi (UR) en fonction de la vitesse de tirage.

**4.** Procédé suivant la revendication 3, caractérisé par le fait que lors d'un accroissement de la vitesse du tirage, le diamètre (D) du galet de renvoi (UR) est réduit.

**5.** Procédé suivant l'une des revendications précédentes, caractérisé par le fait qu'on modifie le diamètre (D) du galet de renvoi (UR) en fonction du diamètre (D) du conducteur formant guide de lumière (LWA).

**6.** Procédé suivant la revendication 5, caractérisé par le fait que lorsque le diamètre du conducteur formant guide de lumière (LWA) augmente, on augmente le diamètre du galet de renvoi (UR).

**7.** Procédé suivant l'une des revendications précédentes, caractérisé par le fait que le conducteur formant guide de lumière (LWA) est guidé sur plus d'un galet de renvoi (UR) dont le diamètre (D) est réglable.

**8.** Procédé suivant l'une des revendications précédentes, caractérisé par le fait que l'enroulement autour du galet de renvoi (UR) s'effectue avec un angle d'enroulement de plus de 180°.

**9.** Procédé suivant l'une des revendications précédentes, caractérisé par le fait que le galet de renvoi (UR) est entraîné avec un couple défini, de sorte qu'on obtient une détente de traction pour le conducteur formant guide de lumière (LWA).

**10.** Procédé suivant l'une des revendications précédentes, caractérisé par le fait qu'on insère une masse en forme de gel entre le guide d'ondes optiques (LWL) et la gaine (M).

**11.** Procédé suivant l'une des revendications précédentes, caractérisé par le fait qu'on reproduit le conducteur formant guide de lumière (LWA) au moyen d'un bain d'eau.

**12.** Procédé suivant l'une des revendications précédentes, caractérisé par le fait qu'on maintient la température du conducteur formant guide de lumière (LWA) dans la zone du galet de renvoi (UR) à une valeur constante, de préférence à une température accrue (par exemple 20°C à 120°C).

**13.** Procédé suivant l'une des revendications précédentes, caractérisé par le fait que le conducteur formant guide de lumière (LWA) circule sur le galet de renvoi (UR) directement en aval de l'extrudeuse (EX).

**14.** Procédé suivant l'une des revendications précédentes, caractérisé par le fait le conducteur formant guide de lumière (LWA) est guidé de façon rectiligne à travers un bassin de refroidissement et est allongé (KB), en amont du galet de renvoi (UR).

**15.** Procédé suivant l'une des revendications précédentes, caractérisé par le fait qu'en tant que galet de renvoi (UR) possédant un diamètre réglable (D), il est prévu deux moitiés de cône (KH) imbriquées l'une dans l'autre, que l'on déplace réciproquement.

**16.** Dispositif pour la mise en oeuvre du procédé suivant l'une des revendications précédentes, moyennant l'utilisation d'une extrudeuse (EX) pour extruder une gaine (M), qui entoure de façon lâche au moins un guide d'ondes optiques (LWL), un dispositif de refroidissement servant à contracter la gaine (M) par rapport au guide d'ondes optiques (LWL) ainsi qu'un dispositif pour tirer la gaine (M) du conducteur formant guide de lumière (LWA) avec une vitesse de tirage réglable, caractérisé par le fait qu'en aval de l'extrudeuse (EX), il est prévu un galet de renvoi (UR), dont le diamètre (D) est variable.

**17.** Dispositif suivant la revendication 16, caractérisé par le fait qu'il est prévu un premier dispositif de mesure (VM1) servant à déterminer la vitesse de tirage des guides d'ondes optiques (LWL) et un second dispositif de mesure (VDM2) pour déterminer la vitesse du conducteur formant guide de lumière (LWL), et que les grandeurs de mesure fournies par ces dispositifs de mesure sont utilisées en tant que grandeurs de réglage pour la modification du diamètre (D) du galet de renvoi (UR).

**18.** Procédé suivant la revendication 17, caractérisé par le fait qu'un second dispositif de mesure de vitesse est formé par un galet de renvoi (URZ), dont le diamètre ne varie pas.

**19.** Dispositif suivant l'une des revendications 16 à 18, caractérisé par le fait qu'il est prévu un dispositif de mesure (DM) pour déterminer le diamètre (d) du conducteur formant guide de lumière (LWA), et que la grandeur de mesure déterminée de cette manière sert de grandeur de commande pour modifier le diamètre (D) du galet de renvoi (UR).

**20.** Dispositif suivant l'une des revendications 16 à 19, caractérisé par le fait qu'il est prévu plus d'un galet de renvoi (UR), dont le diamètre (D) est réglable.

**21.** Dispositif suivant l'une des revendications 16 à 20, caractérisé par le fait que l'angle d'enroulement autour du galet de renvoi (UR) est égal au moins à 180° et est de préférence supérieur à 270°.

**22.** Dispositif suivant l'une des revendications 16 à 21, caractérisé par le fait que le galet de renvoi (UR) est équipé d'un dispositif d'entraînement.

**23.** Dispositif suivant la revendication 22, caractérisé par le fait que le couple du dispositif d'entraînement du galet de renvoi (UR) est commandé.

**24.** Dispositif suivant l'une des revendications 16 à 23, caractérisé par le fait qu'en amont de l'extrudeuse (EX), il est prévu un dispositif de remplissage permettant l'insertion d'une masse en forme de gel à l'intérieur du conducteur formant guide de lumière (LWA).

**25.** Dispositif suivant l'une des revendications 16 à 24, caractérisé par le fait que pour le refroidissement du conducteur formant guide de lumière (LWA), il est prévu un bassin de refroidissement (KB) disposé de préférence entre l'extrudeuse (EX) et le galet de renvoi (UR) de diamètre variable.

# FIG 1

# FIG 2

# FIG 3

# FIG 4

## FIG 5

## FIG 6

EP 0 275 994 B1